# EUROPEAN PATENT APPLICATION

(11) **EP 1 289 320 A1**
(43) Date of publication of application: **05.03.2003**
(21) Application number: 01440290.3
(22) Date of filing: 04.09.2001
(51) Int. Cl.: H04Q 7/22

(54) **Mobile station with two communication interfaces**

(71) Applicant: ALCATEL, 75008 Paris (FR)
(72) Inventor: Kumar, Vinod, 75005 Paris (FR); Coupechoux, Marceau, c/o Alcatel Cit, 91460 Marcoussis (FR)
(74) Representative: Schäfer, Wolfgang

(57) **Abstract**

The present invention relates to a mobile station (100) having two communication interfaces (10, 20) and to a method of providing a location dependent service to said mobile station (100) utilising said two communication interfaces (10, 20). For providing a highly flexible mobile station (100) it is suggested that both communication interfaces (10, 20) can be used simultaneously, and that said mobile station (100) comprises a gateway module (40) for forwarding data from said first communication interface (10) to said second communication interface (20) and vice versa.

## Description

The present invention relates to a mobile station having two communication interfaces and to a method of providing a location dependent service to said mobile station.

State of the art mobile stations are used for radio-based communication within cellular networks, for example in GSM or UMTS networks.

Though said mobile stations are equipped with two communication interfaces capable of working with various different GSM networks operating at different frequency bands, there are no means for providing location dependent services with a spatial resolution significantly smaller than GSM cell radius.

Furthermore, said two communication interfaces are not used efficiently in said mobile stations.

Accordingly, it is an object of the present invention to provide a highly flexible mobile station with two communication interfaces to overcome the deficiencies associated with known systems and to provide a method of operating said mobile station.

It is a further object of the present invention to suggest a method of providing a location dependent service to a mobile station with two communication interfaces.

According to the invention, these objects are achieved by providing a mobile station having a first communication interface and a second communication interface, characterised in that both communication interfaces can be used simultaneously, and in that said mobile station comprises a gateway module for forwarding data from said first communication interface to said second communication interface and vice versa.

Since simultaneous operation of both communication interfaces is possible, the mobile station can communicate with two networks at the same time. By utilising the proposed gateway, it is further possible to exchange data between both networks.

According to one embodiment of the invention, said first communication interface is able to communicate with a first, preferably a micro-cellular network, and said second communication interface is able to communicate with a second, preferably a macro-cellular network.

A further advantageous embodiment of the invention is characterised in that said first communication interface is able to handle packet switched and/or circuit switched traffic, and that said second communication interface is able to handle packet switched and/or circuit switched traffic.

The capability of optionally handling packet switched or circuit switched data increases flexibility of the mobile station. It is, too, possible to provide a mobile station with a first communication interface able to handle packet switched data and a second communication interface that is able to handle circuit switched data.

Such a combination, in conjunction with said gateway, is especially interesting for the mobile station joining a micro-cellular network and a macro-cellular network simultaneously. For instance, a micro-cellular network may be composed of a plurality of short-range radio link terminals according to the Bluetooth de-facto standard. Though circuit switching is also provided by the Bluetooth de-facto standard, these terminals usually employ packet switching for communication.

By using said first communication interface, the mobile station according to the invention can join the Bluetooth network while at the same time communicating with a superposed, macro-cellular GSM network via said second communication interface characterised by circuit switched communication.

A further solution to the objects of the invention is provided by proposing a method of operating a mobile station of the aforementioned kind according to the claims 4 to 6, a variant of which is characterised by using both communication interfaces simultaneously, and by forwarding data from said first communication interface to said second communication interface and vice versa by means of a gateway.

Another embodiment of the method according to the invention is characterised by communicating via said first communication interface with a first, preferably a micro-cellular network, and by communicating via said second communication interface with a second, preferably a macro-cellular network.

Yet another embodiment of the method according to the invention is characterised by handling packet switched and/or circuit switched traffic by means of said first communication interface, and by handling packet switched and/or circuit switched traffic by means of said second communication interface.

It is presented a further solution to the objects of the invention, concerning a method of providing a location dependent service to a mobile station, said mobile station having a first communication interface for communicating with a first, preferably a micro-cellular network, and a second communication interface for communicating with a second, preferably a macro-cellular network, wherein both communication interfaces are used simultaneously, and wherein said mobile station comprises a gateway module which forwards data from said first communication interface to said second communication interface and vice versa, comprising the steps of:
- receiving over said first communication interface position related information of said mobile station from said micro-cellular network,
- forwarding said position related information from said first communication interface to said second communication interface by means of said gateway module,
- transmitting said position related information from said second communication interface to said macro-cellular network,
- providing over said macro-cellular network and said second communication interface to said mobile station a service associated to said position related information.

The method according to the invention provides information on the position of the mobile station by evaluating data received over said micro-cellular network. This position related information is forwarded to said macro-cellular network. A service provider also connected to the macro-cellular network analyses the position related information of said mobile station and returns service information to said mobile station via said macro-cellular network.

Typically, the service information depends on the position related information.

For instance, regional commercial advertising can be provided by the service provider depending on the position of the mobile station.

Other objects, features and advantages of the present invention will become apparent from the following detailed description of a preferred embodiment of the invention in conjunction with the accompanying figures, in which:
- Fig. 1: depicts a block-diagram of a mobile station according to the present invention,
- Fig. 2: depicts a networking scenario involving a macro-cellular network, a micro-cellular network and a mobile station according to the present invention, and
- Fig. 3: is a flow chart depicting a method according to the present invention.

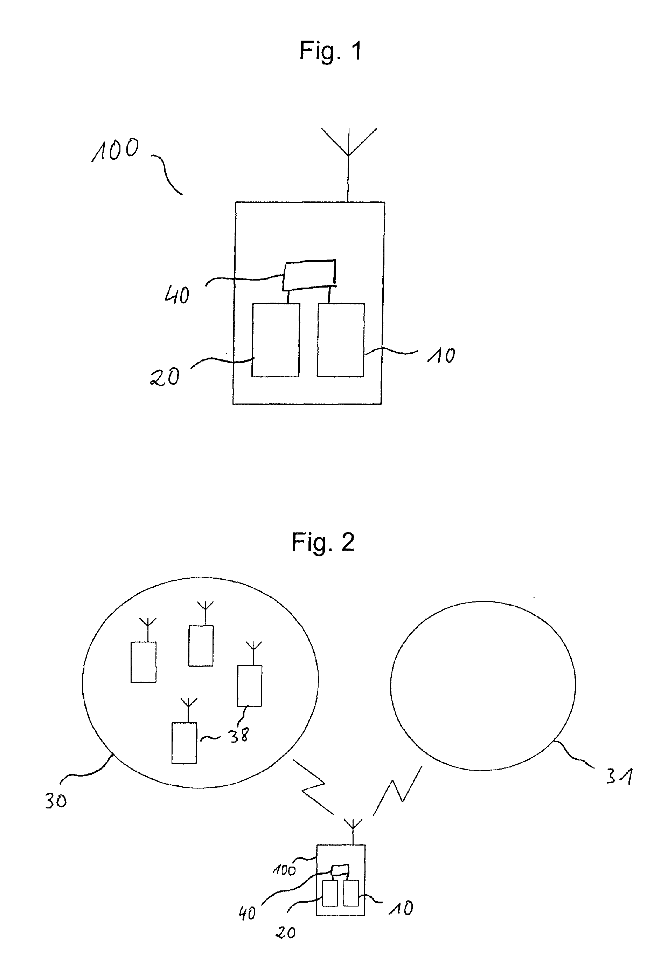

The block-diagram of Fig. 1 shows a mobile station 100, that has a first communication interface 10 and a second communication interface 20.

Said communication interfaces 10, 20 are connected to a gateway 40 that is capable of forwarding data from said first communication interface 10 to said second communication interface 20. It is also possible for said gateway 40 to forward data in the reverse direction, i.e. from said second communication interface 20 to said first communication interface 10 of said mobile station 100.

Both communication interfaces 10, 20 comprise means for radio transmission, which is symbolised by an antenna.

As shown in the networking scenario of Fig. 2, the mobile station 100 communicates simultaneously with a first communication network 30, and with a second communication network 31.

The first communication network 30 is a micro-cellular network comprising a plurality of micro-base-stations 38. The micro-base-stations 38 are devices designed for short-range radio communication, in this example they operate according to the Bluetooth de-facto standard. In the first communication network 30, communication is performed by packet switching.

The second communication network 31 is a macro-cellular circuit switching network as proposed by the GSM standard.

The macro-cellular network 31 comprises a plurality of macro-base-stations (not shown in figure 2).

The first communication interface 10 is capable of performing packet switched data transfer to/from said first communication network 30, whereas the second communication interface 20 is capable of performing circuit switched data transfer to/from said second communication network 31.

The communication interfaces 10, 20 need not necessarily be limited to the respective mode of data transfer. It is also possible to provide communication interfaces 10, 20 that can optionally handle packet switched and/or circuit switched data. However, in practice a particular design limited to one mode of data transfer for each interface is preferred to limit complexity of the mobile station 100.

Data originating from the first communication network 30 received by the first communication interface 10 can be forwarded to the second communication network 31 via the second communication interface 20 by means of said gateway 40.

This mechanism is employed for providing a location dependent service to the mobile station 100.

The flow chart of Fig. 3 comprises a first step 200, in which position related information of said mobile station 100 is received from said first communication network 30 over said first communication interface 10. The step 200 can be executed whenever the mobile station 100 is in the proximity of a suitable micro-base-station 38 of the first communication network 30, i.e. if the mobile station 100 is within a micro-cell of the first communication network 30.

Supplied with said position related information, the mobile station 100 forwards this position related information in the aforementioned manner in a step 210 to said second communication interface 20, which in a step 220 transmits the position related information to a service provider that is part of the second, macro-cellular communication network 31.

The service provider then returns service information associated to said position related information over said second communication network 31 to said mobile station 100. This is done in step 230 of Fig. 3.

Communication with said first communication network 30 in this example is only performed in order to gain position related information of the mobile station 100. More precisely, an arbitrary base-station 38 transmits its own position or the position of the micro-cell it is in, respectively. This position related information can be used by the mobile station 100 - if it is within the same micro-cell and can receive said position related information - for forwarding it to said service provider.

Due to this mechanism, the position related information has a spatial resolution in the order of about the size of said micro-cell. Compared to the typical size of a macro-cell of a macro-cellular network 31, a considerable improvement of precision can thus be achieved.

Providing a location dependent service itself is then handled by said second, macro-cellular communication network 31.

For instance, regional commercial advertising can be provided by the service provider depending on the position of the mobile station.

## Claims

1. Mobile station (100) having a first communication interface (10) and a second communication interface (20), **characterised in that** both communication interfaces (10, 20) can be used simultaneously, and **in that** said mobile station (100) comprises a gateway module (40) for forwarding data from said first communication interface (10) to said second communication interface (20) and vice versa.

2. Mobile station (100) according to claim 1, **characterised in that** said first communication interface (10) is able to communicate with a first, preferably a micro-cellular network (30), and that said second communication interface (20) is able to communicate with a second, preferably a macro-cellular network (31).

3. Mobile station (100) according to one of the preceding claims, **characterised in that** said first communication interface (10) is able to handle packet switched and/or circuit switched traffic, and that said second communication interface (20) is able to handle packet switched and/or circuit switched traffic.

4. Method of operating a mobile station (100) having a first communication interface (10) and a second communication interface (20), **characterised by** using both communication interfaces (10, 20) simultaneously, and by forwarding data from said first communication interface (10) to said second communication interface (20) and vice versa by means of a gateway (40).

5. Method according to claim 4, **characterised by** communicating via said first communication interface (10) with a first, preferably a micro-cellular network (30), and by communicating via said second communication interface (20) with a second, preferably a macro-cellular network (31).

6. Method according to claim 4 or 5, **characterised by** handling packet switched and/or circuit switched traffic by means of said first communication interface (10), and by handling packet switched and/or circuit switched traffic by means of said second communication interface (20).

7. Method of providing a location dependent service to a mobile station (100), said mobile station (100) having a first communication interface (10) for communicating with a first, preferably a micro-cellular network (30), and a second communication interface (20) for communicating with a second, preferably a macro-cellular network (31), wherein both communication interfaces (10, 20) are used simultaneously, and wherein said mobile station (100) comprises a gateway module (40) which forwards data from said first communication interface (10) to said second communication interface (20) and vice versa, comprising the steps of:
- receiving over said first communication interface (10) position related information of said mobile station (100) from said micro-cellular network (30),
- forwarding said position related information from said first communication interface (10) to said second communication interface (20) by means of said gateway module (40),
- transmitting said position related information from said second communication interface (20) to said macro-cellular network (31),
- providing over said macro-cellular network (31) and said second communication interface (20) to said mobile station (100) a service associated to said position related information.
